# EUROPÄISCHE PATENTSCHRIFT

(11) **EP 0 877 699 B1**
(45) Veröffentlichungstag und Bekanntmachung des Hinweises auf die Patenterteilung: **14.05.2003**
(21) Anmeldenummer: 97913076.2
(22) Anmeldetag: 29.11.1997
(51) Int. Cl.: B62D 37/02

(54) **EINRICHTUNG ZUM VERBESSERN DES FAHRVERHALTENS EINES STRASSENFAHRZEUGES UND STRASSENFAHRZEUG MIT EINER DERARTIGEN EINRICHTUNG**
DEVICE FOR IMPROVING DRIVEABILITY OF A ROAD VEHICLE AND ROAD VEHICLE USING SUCH A DEVICE
DISPOSITIF POUR L'AMELIORATION DE LA TENUE DE ROUTE D'UN VEHICULE ROUTIER, ET VEHICULE ROUTIER POURVU D'UN TEL DISPOSITIF

(30) Priorität: 29.11.1996 CH 293796
(43) Veröffentlichungstag der Anmeldung: 18.11.1998
(73) Patentinhaber: PERAVES AKTIENGESELLSCHAFT, CH-8406 Winterthur (CH)
(72) Erfinder: WAGNER, Arnold, CH-8406 Winterthur (CH)
(86) Internationale Anmeldenummer: CH9700451
(87) Internationale Veröffentlichungsnummer: WO98023478

(56) Entgegenhaltungen:
- DE-C- 909 300
- FR-A- 1 166 804
- US-A- 3 512 825
- US-A- 5 090 766

## Beschreibung

Die Erfindung betrifft eine Einrichtung zum Verbessern des Fahrverhaltens eines Strassenfahrzeuges entsprechend dem Oberbegriff des Patentanspruchs 1 sowie ein Strassenfahrzeug mit einer derartigen Einrichtung.

Das Fahrverhalten von Strassenfahrzeugen wird einerseits durch im Kontakt mit der Strasse rollende Räder, Raupen oder gleitende Kufen und deren Lenkung bestimmt. Andererseits wirken während der Fahrt auf den Fahrzeugaufbau, und gegebenenfalls bei offenen Fahrzeugen auf Aufsassen und/oder Zuladung, aerodynamische Kräfte, die in Form von Luftwiderstand eine Abbremsung und, insbesondere bei Seitenwind und/oder Turbulenz, Störungen im Fahrverhalten verursachen können. Zur Verminderung der Abbremswirkung sind die Aufbauten von Strassenfahrzeugen nach Möglichkeit strömungsgünstig und auf kleine Querschnittsflächen durchgebildet. Dabei soll der Schwerpunkt der Längsschnittflächen aus Stabilitätsgründen beim oder hinter dem Schwerpunkt des Fahrzeuges liegen.

Bei offenen Fahrzeugen, z.B. Motorrädern, wird durch Verschalungen, welche den Fahrtwind teilweise um oder über den bzw. die Aufsassen umlenken, eine Verminderung der Abbremswirkung und eine Verbesserung der Stabilität angestrebt. Bei zweispurigen Fahrzeugen, z.B. Automobilen, ist es bekannt. an den hinteren und/oder vorderen Enden der Fahrzeuge horizontale Führungsflächen (Spoiler) anzuordnen, welche Abtriebsluftkräfte auf das Fahrzeug ausüben und damit. durch eine erhöhte Belastung des Fahrwerks, eine grössere Bodenpressung zur Übertragung entsprechend grösserer Reibungskräfte bewirken sollen.

Ferner sind Einrichtungen bekannt, welche z.B. je zwei am Heck des Fahrzeuges feststehend angeordnete, in Fahrzeug- Längsrichtung verlaufende. vertikale Führungsflossen enthalten. Durch derartige Führungsflossen sind zwar einerseits Luftkräfte zur Verbesserung der Richtungsstabilität auf das Fahrzeug übertragbar, andererseits kann aufgrund der entsprechend vergrösserten Längsschnittfläche des Fahrzeuges dessen Stabilität in Querrichtung. und damit das Fahrverhalten unter der Einwirkung von Querkräften, z.B. bei Seitenwind, beeinträchtigt werden.

Eine aus der FR-A-1 166 804 bekannte Einrichtung der eingangs genannten Art ist an einem einspurigen Kabinenfahrzeug mit Fliessheck ausgebildet. Die bekannte Einrichtung enthält eine auf dem Fliessheck feststehend angeordnete erste vertikale Führungsflosse, die sich in Fahrzeug- Längsrichtung vom Dachbereich gegen einen Endabschnitt des Fliesshecks erstreckt, und eine aus diesem Endabschnitt über die Heckpartie hinaus nach hinten vorstehende zweite vertikale Führungsflosse in Form eines Steuerruders, welches am hinteren Ende des Fahrzeuges um eine aufrecht angeordnete erste Drehachse schwenkbar gelagert ist und welches sich annähernd über die Höhe des Fahrzeugkörpers erstreckt.

Oberhalb des Steuerruders ist eine nach oben abstehende Stellklappe angeordnet, die über einen Lenker an der feststehenden Führungsflosse um eine aufrecht angeordnete zweite Drehachse schwenkbar gelagert und über eine seitlich abstehende Gestängeanordnung mit dem Steuerruder um die zweite Drehachse auslenkbar gekoppelt ist. Bei Einwirkung von Seitenwind während der Fahrt stellt sich die Stellklappe entsprechend der jeweiligen Windresultante mit einem Winkel gegenüber der Längsmittelebene des Fahrzeuges ein, wobei das Steuerruder über das Gestänge im gleichen Drehsinn um einen Winkel ausgelenkt werden soll, der grösser ist als der Einstellwinkel der Stellklappe. Dadurch soll eine Auslenkung mit Steuerwirkung für eine Fahrzeugneigung gegen den Wind bewirkt werden. Für andere Steuerfunktionen als diese Seitenwindkompensation für Einspurfahrzeuge und/oder andere Fahrzeugarten ist die bekannte Einrichtung nicht vorgesehen.

Ein Nachteil der bekannten Einrichtung wird darin gesehen, dass durch die feststehende Führungsflosse die feste Längsschnittfläche des Fahrzeuges vergrössert und die Wirkung eines Ausschlags des Steuerruders verkleinert wird, wodurch, wie vorstehend erwähnt, die Stabilität in Querrichtung und damit insbesondere das Fahrverhalten des Fahrzeuges unter der Einwirkung von Querkräften beeinträchtigt werden kann. Die feststehende Führungsflosse, das Steuerruder und die untere Hälfte der Stellklappe sind zudem in einem Höhenbereich angeordnet. der im Windschatten des Fahrzeugaufbaus und damit im Bereich von abgelösten und turbulenten Schichten der Fahrtwind-Luftströmung liegt. Als nachteilig wird ferner angesehen, dass das über die Heckpartie des Fahrzeuges nach hinten vorstehende Steuerruder der Gefahr von Kollisions- und Parkschäden ausgesetzt ist. und dass die gesamten Steuerwirkungen indirekt über die vom Steuerruder und von der Stellklappe seitlich abstehende. offene Gestängeanordnung übertragen werden müssen, deren relativ leicht zugängliche Verbindungsteile im Luftstrom liegen und der Gefahr von, z. B. mutwilligen. Beschädigungen ausgesetzt sind. Weiter ist bei dieser Anordnung für die Verstellwirkung mittels indirekter Gestängeübertragung eine verhältnismässig grosse Stellklappenfläche erforderlich. Diese und ein relativ langer Hebelarm der Stellklappenanlenkung, das der gesamten Verstellwirkung anzupassende Gestänge und das an der feststehenden Führungsflosse und am Fahrzeugheck angelenkte Steuerruder ergeben zudem relativ hohe Massenträgheitsmomente, welche sich in verzögerten Steuerausschlägen bei rasch wechselnden Strömungsbedingungen, z.B. in Turbulenzen oder Böen, negativ auswirken können.

Der Erfindung liegt die objektive Aufgabe zugrunde. eine verbesserte Einrichtung der eingangs genannten Art zu schaffen, bei der die vorstehend genannten Nachteile nicht auftreten, und welche auch bei ungünstigen, insbesondere durch Einwirkung von Querkräften beeinträchtigten Fahrbedingungen eine gegenüber bisherigen Ausführungen verbesserte Richtungsstabilität gewährleistet und zugleich eine wirksame Verbesserung der Stabilität des Fahrzeuges in Querrichtung ermöglicht.

Diese Aufgabe wird erfindungsgemäss durch die im kennzeichnenden Teil des Patentanspruchs 1 angegebenen Merkmale gelöst.

Die erfindungsgemäss ausgeführte Einrichtung ist am Fahrzeug über den Fahrzeugaufbau nach oben vorstehend. und somit ausserhalb von turbulenten und/oder abgelösten Grenzschichten bzw. Totwasserbereichen der Luftströmung, angebracht. Dadurch werden sowohl die Führungsflosse als auch die auf ihr angelenkte Steuerflosse jeweils direkt vom Fahrtwind angeströmt, wobei die auf die Steuerflosse einwirkenden Luftkräfte über die Lagerung der Steuerflosse direkt auf die Führungsflosse übertragen werden. Dies gestattet ungehinderte Einstellbewegungen der mit der Steuerflosse gekoppelten Führungsflosse um die erste Drehachse, entsprechend den jeweils auf die Führungsflosse in Längs- und Querrichtung einwirkenden Luftkräften, und ermöglicht zugleich eine selbsttätige Positionierung der Führungsflosse in einer aerodynamisch wirksamen, definierten Betriebsstellung, welche durch die Auslenkstellung der Steuerflosse und die auf diese entsprechend ihrer Stellung zur Anströmrichtung einwirkende Querkraft bestimmt ist. Die in der Führungsflosse angebrachte Verbindungsanordnung gestattet eine definierte Begrenzung des Ausstellwinkels der Steuerflosse relativ zur Führungsflosse.

Die erfindungsgemässe Ausführung ermöglicht somit die Erzeugung seitlicher Luftkräfte, welche, im Gegensatz zu bisherigen Ausführungen, durch Seitenwind und/oder Turbulenz kaum verändert werden. Dadurch wird. entsprechend der jeweiligen Auslenkstellung der Steuerflosse relativ zur Führungsflosse, auch bei variablen Windverhältnissen eine nahezu gleichmässige Krafteinwirkung von der Einrichtung auf das Fahrzeug ausgeübt. Die erfindungsgemässe Einrichtung ist für einund mehrspurige Fahrzeuge geeignet. Bei einspurigen Fahrzeugen ist eine wesentliche Verbesserung des Fahrverhaltens unter ungünstigen Bedingungen. insbesondere bei Seitenwind, Turbulenz, bei hoher Geschwindigkeit und niedrigem Reibungswert der Strasse, erzielbar. Bei mehrspurigen Fahrzeugen können zudem beim Durchfahren von Kurven Querkräfte erzeugt werden. welche, im Vergleich zu bisherigen Ausführungen, eine Erhöhung der möglichen Kurvengeschwindigkeiten gestatten sowie eine Verringerung der kurvenäusseren Neigung des Fahrzeugaufbaus bewirken.

Ausgestaltungen der Erfindung sind in den abhängigen Patentansprüchen angegeben.

Ein mit einer erfindungsgemässen Einrichtung versehenes Strassenfahrzeug ist Gegenstand des Anspruchs 10.

Die Erfindung wird anhand eines in der Zeichnung schematisch dargestellten Ausführungsbeispiels erläutert. Es zeigen:
- Fig.1: ein Strassenfahrzeug mit einer erfindungsgemäss ausgebildeten Einrichtung zum Verbessern des Fahrverhaltens des Fahrzeugs in einer Seitenansicht,
- Fig.2: die Einrichtung nach Fig.1 in einer teilweise geschnittenen, grösseren Teilansicht, und
- Fig.3: die Einrichtung nach Fig.1 in einer grösseren Teildraufsicht.

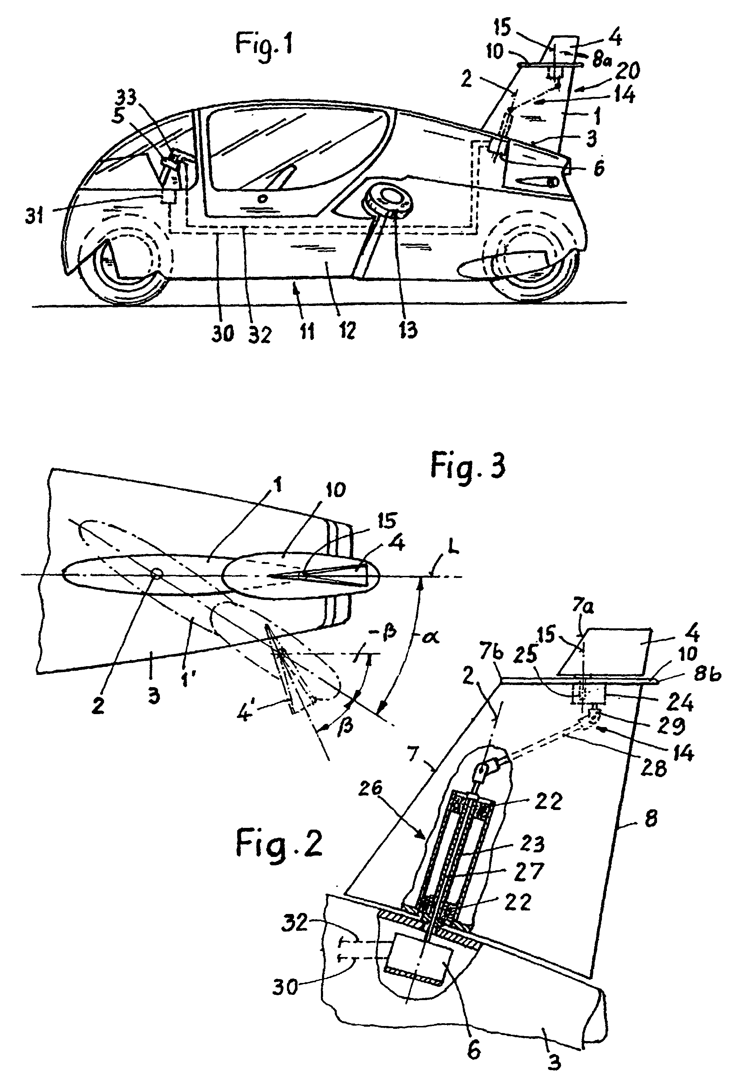

Das Strassenfahrzeug nach Fig.1, darstellungsgemäss ein einspuriges Kabinenmotorrad 11 mit einer Lenkvorrichtung 5, einem geschlossenen Fahrzeugkörper 12 und beidseitig ausschwenkbaren Stützrollen 13, enthält eine Einrichtung 20 zum Verbessern des Fahrverhaltens, insbesondere zum Stabilisieren und/oder Steuern, des Fahrzeugs. Die Einrichtung 20 umfasst eine im Heckbereich des Fahrzeugs nach oben abstehend angeordnete, in Fahrzeug- Längsrichtung orientierbare Führungsflosse 1 und eine oberhalb derselben nach oben abstehend angeordnete, ebenfalls in Fahrzeug-Längsrichtung orientierbare Steuerflosse 4. Die Führungsflosse 1 ist am Fahrzeugkörper 12 um eine aufrecht, darstellungsgemäss im wesentlichen senkrecht zu einem Karosserieabschnitt 3, angeordnete erste Drehachse 2 frei schwenkbar angelenkt. Die Steuerflosse 4 ist an der Führungsflosse 1 um eine gegenüber deren Drehachse 2 nach hinten versetzte, im wesentlichen senkrecht angeordnete, zweite Drehachse 15 schwenkbar angelenkt und über eine Verbindungsanordnung 14 mit der Führungsflosse 1 relativ zu dieser um die zweite Drehachse 15 auslenkbar und in mindestens einem Ausstellwinkel β feststellbar gekoppelt. Dadurch stellt sich die Führungsflosse 1 während der Fahrt jeweils um die erste Drehachse 2 mit einem durch die Auslenkstellung der Steuerflosse 4 bestimmten Anstellwinkel α gegenüber der Längsmittelebene L (Fig.3) des Fahrzeugs ein.

Anströmungen durch Fahrtwind und/oder meteorologisch bedingte Luftbewegungen bewirken bei der beschriebenen Ausführung Luftkräfte auf die Steuerflosse 4 entsprechend ihrer Stellung zur Anströmrichtung, welche über die zweite Drehachse 15 hinter der ersten Drehachse 2 auf die Führungsflosse 1 übertragen werden und diese somit auf eine durch den relativen Winkel β zwischen den beiden Flossen 1 und 4 bestimmte Lage in der Strömung stellen. Dies hat zur Folge, dass auf die Führungsflosse 1 eine definierte Luftkraft ausgeübt wird, welche über die erste Drehachse 2 auf die Fahrzeugstruktur 3 übertragen wird, und welche somit eine direkte Beeinflussung der Stabilität und/oder der Steuerung des Fahrzeugs ermöglicht.

Am oberen Ende der Führungsflosse 1 kann darstellungsgemäss eine im wesentlichen horizontal angeordnete Trennplatte 10 angebracht sein, durch welche die auf die Führungsflosse 1 und die Steuerflosse 4 einwirkenden Luftströmungen voneinander getrennt werden können. Dadurch können einerseits die durch die Führungsflosse 1 erzeugbaren Luftkräfte erhöht werden, andererseits kann die Wirksamkeit der jeweiligen Verschwenkung der Steuerflosse 4 gegenüber der Führungsflosse 1 verstärkt werden.

Gemäss Fig.3 kann die Führungsflosse 1 mit einem aerodynamischen Flügelprofil ausgeführt sein, durch welches die erzeugbaren Luftkräfte vergrössert und Unstetigkeiten, insbesondere Strömungsablösungen, vermieden werden können. Die Steuerflosse 4 kann ein ähnliches oder, wie dargestellt, ein annähernd keilförmiges Profil aufweisen. Ausführungen mit flachen Führungs- und/oder Steuerflossen sind ebenfalls möglich.

Wie insbesondere aus der Fig.2 hervorgeht, ist die Führungsflosse 1 über eine Lageranordnung, darstellungsgemäss mittels Wälzlagern 22, um die Drehachse 2 frei drehbar auf einem Tragrohr 23 gelagert, welches auf dem Fahrzeugkörper 12 fest angebracht ist. Die Verbindungsanordnung 14 umfasst ein in der Führungsflosse 1 angebrachtes Verstellelement, darstellungsgemäss ein Getriebe 24, welches mit einem in der Führungsflosse 1 gelagerten Drehzapfen 25 der Steuerflosse 4 gekoppelt ist, und eine von der Lenkvorrichtung 5 des Fahrzeuges aus beeinflussbare Steuervorrichtung 26. Diese enthält ein im Fahrzeugkörper 12 angeordnetes Stellorgan, darstellungsgemäss einen Servomotor 6, der über eine im Tragrohr 23 gelagerte Steuerwelle 27 und eine Gelenkwelle 28 mit einer Verstellwelle 29 des Getriebes 24 koppelbar ist. Der Servomotor 6 ist über eine Steuerleitung 30 an eine mit der Lenkvorrichtung 5 gekoppelte Steuereinheit 31 angeschlossen. Der Servomotor 6 kann ferner über mindestens eine weitere Steuerleitung 32 an mindestens einen Sensor 33 angeschlossen sein, durch den ein Stabilitätsparameter des Fahrzeuges, z.B. Kurs, Seitenneigung, Anströmung, Geschwindigkeit, Querbeschleunigung, eine Schwingung und dergleichen erfasst und entsprechende Steuersignale auf den Servomotor 6 übertragen werden.

Die Führungsflosse 1 und die Steuerflosse 4 sind über das Getriebe 24 zwischen mindestens zwei Koppelstellungen umstellbar gekoppelt, derart, dass bei einer Auslenkung der Führungsflosse 1 um einen Anstellwinkel α zur Fahrzeug- Längsrichtung auf die Steuerflosse 4 in der einen Koppelstellung eine gleichgerichtete Auslenkung um einen proportionalen Ausstellwinkel β, und in der anderen Koppelstellung eine entgegengerichtete Auslenkung um einen Ausstellwinkel -β übertragen wird (Fig.3). Bei Ausführungen mit darstellungsgemäss am Fahrzeugheck angeordneter Führungsflosse 1 bewirkt eine gleichgerichtete Auslenkung der Steuerflosse 4 eine durch Luftkraft bedingte Stabilisierung des Fahrzeuges um seine Hochachse durch eine Art "Windfahneneffekt", entsprechend einer Vergrösserung der Längsschnittfläche hinter der Fahrzeugmitte. Eine entgegengerichtete Auslenkung erzeugt eine den Einwirkungen von Seitenwind entgegengerichtete Luftkraft, die eine selbsttätige Neigung des Fahrzeugs um die Längsachse gegen die Windrichtung bewirkt.

Die für die Auslenkung der Führungsflosse 1 durch die Steuerflosse 4 erforderliche Zeit wird, neben den geometrischen Verhältnissen der Einrichtung, dem Ausstellwinkel β und dem Staudruck der Strömung, durch die Grösse des Trägheitsmoments der Einrichtung um die erste Drehachse 2 bestimmt. Dabei kann die Massenverteilung um diese Drehachse 2 zur Beeinflussung von Bewegungen um die Rollachse benutzt werden, indem ein Mehrgewicht der Einrichtung vor der Drehachse 2 rolldämpfend, und ein solches hinter der Drehachse 2 rollfördernd wirkt.

Über die Steuervorrichtung 26 kann die Steuerflosse 4 jeweils von der Lenkvorrichtung 5 des Fahrzeuges aus um die zweite Drehachse 15 verschwenkt und damit, über die entsprechende Auslenkung der Steuerflosse 1 um die erste Drehachse 2, eine Luftkraft erzeugt werden, welche das dargestellte, einspurige Fahrzeug in Lenkrichtung um seine Längsachse neigt. Bei einem nicht dargestellten mehrspurigen Fahrzeug kann mit einer entsprechenden Einrichtung eine Luftkraft erzeugt werden, welche beim Durchfahren von Kurven der Zentrifugalkraft und einer Neigung des Fahrzeugaufbaus entgegenwirkt, und damit höhere Kurvengeschwindigkeiten ermöglicht.

Über das Stellorgan 6 kann die Verstellung der Steuerflosse 4 um die zweite Drehachse 15 über die Lenkvorrichtung 5 und/oder in Abhängigkeit von Steuersignalen mindestens eines Sensors 33 verschwenkt werden, durch welche eine entsprechende Stabilisierungswirkung, z.B hinsichtlich Kurshaltung, Aufrichtung, Windkorrektur, Schwingungsdämpfung usw., messabhängig erzielbar ist. Mit dieser Ausführung kann die Führungsflosse 1 somit direkt zur Steuerung und Stabilitätsverbesserung mittels Luftkraft benutzt werden.

Sowohl die Führungsflosse 1 als auch die Steuerflosse 4 erzielen dann optimale Wirkungen, wenn sie vom Fahrtwind direkt beaufschlagt,und damit ausserhalb von turbulenten Grenzschichten bzw. Totwasserbereichen, d.h. über den Fahrzeugaufbau vorstehend angebracht sind. Um Aufprallschäden bei Kollisionen zu minimieren und den gesetzlichen Bestimmungen für Strassenfahrzeuge zu genügen, können die Führungsflosse 1, die Steuerflosse 4 und die Trennplatte 10 je mit einer gerundeten, nach hinten geneigt verlaufenden und/oder aus einem nachgebenden Material bestehenden Vorderkante 7 bzw. 7a bzw. 7b sowie gegebenenfalls mit einer entsprechenden Hinterkante 8 bzw. 8a bzw. 8b ausgeführt sein. Ferner können Teile der Lageranordnungen im Bereich der Drehachsen 2 und 15, z.B. die Steuerwelle 27, das Tragrohr 23 und /oder der Drehzapfen 25 aus einem unter der Einwirkung einer vorbestimmten Stosskraft nachgebenden Material bestehen, welches die Bildung einer Sollbruchstelle ermöglicht.

Durch ein in der Verbindungsanordnung 14, beim dargestellten Beispiel im oder am Stellorgan 6, vorgesehenes, nicht dargestelltes Einstellmittel kann die Grundeinstellung des Auslenkwinkels β zwischen der Führungsflosse 1 und der Steuerflosse 4 verändert, und damit eine Fahrzeugtrimmung, z.B. zum Ausgleich einer einseitigen Beladung, erzielt werden.

## Patentansprüche

1. Einrichtung zum Verbessern des Fahrverhaltens eines Strassenfahrzeuges, mit mindestens einer in Fahrzeug-Längsrichtung orientierbaren Führungsflosse (1), die am Fahrzeugkörper (12) um eine aufrecht angeordnete gerste Drehachse (2) frei schwenkbar gelagert ist, und mindestens einer oberhalb der Führungsflosse (1) nach oben abstehend angeordneten Steuerflosse (4), welche um eine aufrecht angeordnete zweite Drehachse (15) schwenkbar gelagert und über eine Verbindungsanordnung (14) mit der Führungsflosse (1) relativ zu dieser um die zweite Drehachse (15) auslenkbar gekoppelt ist, **dadurch gekennzeichnet, dass** die Führungsflosse (1) innerhalb eines Längenabschnitts des Fahrzeugkörpers (12), über den Fahrzeugaufbau nach oben vorstehend, angebracht und angelenkt ist, dass die Steuerflosse (4) auf der Führungsflosse (1) angebracht und angelenkt ist, und dass die Verbindungsanordnung (14) in der Führungsflosse (1) angebracht ist und ein Stellmittel zum Feststellen der Steuerflosse (4) in mindestens einer Auslenkstellung enthält.

2. Einrichtung nach Anspruch 1, **dadurch gekennzeichnet, dass** die Drehachse (15) der Steuerflosse (4) gegenüber der Drehachse (2) der Führungsflosse (1) nach hinten versetzt ist.

3. Einrichtung nach Anspruch 1 oder 2, **dadurch gekennzeichnet, dass** die Verbindungsanordnung (14) mindestens ein mit der Führungsflosse (1) und der Steuerflosse (4) koppelbares, in mindestens zwei Koppelstellungen einstellbares Verstellelement (24) enthält, über welches , bei einer Auslenkung der Führungsflosse (1) um einen Anstellwinkel (α) gegenüber ihrer in Fahrzeug-Längsrichtung verlaufenden Grundstellung, auf die Steuerflosse (4) in der einen Koppelstellung eine gleichgerichtete, und in der anderen Koppelstellung eine entgegengerichtete Auslenkung um einen Ausstellwinkel (β) gegenüber der führungsflosse (1) übertragbar ist.

4. Einrichtung nach einem der vorangehenden Ansprüche, **dadurch gekennzeichnet, dass** die Verbindungsanordnung (14) eine mit der Steuerflosse (4) koppelbare, von der Lenkvorrichtung (5) des Fahrzeuges aus beeinflussbare Steuervorrichtung (26) enthält, welche ein Stellorgan (6) zum Verschwenken der Steuerflosse (4) um die zweite Drehachse (15) aufweist.

5. Einrichtung nach Anspruch 4, **dadurch gekennzeichnet, dass** die Steuervorrichtung (26) mindestens einen Sensor (33) enthält, welcher zum Erfassen mindestens eines Stabilitätsparameters, z.B. Seitenneigung, Kurs, Anströmung, Geschwindigkeit, einer Schwingung und dergleichen, des Fahrzeuges und zum Übertragen entsprechender Steuersignale auf das Stellorgan (6) bestimmt ist.

6. Einrichtung nach einem der vorangehenden Ansprüche, **dadurch gekennzeichnet, dass** die Führungsflosse (1) und/oder die Steuerflosse (4) je mit einer gerundeten und/oder nach hinten geneigt verlaufenden Vorderkante (7 bzw. 7a, 7b) ausgeführt sind.

7. Einrichtung nach einem der vorangehenden Ansprüche, **dadurch gekennzeichnet, dass** mindestens ein Teil der Führungsflosse (1) und/oder der Steuerflosse (4), z.B. eine Vorderkante (7 bzw. 7a) und/oder eine Hinterkante (8 bzw. 8a), und/oder mindestens ein Teil der Lageranordnung für eine der Drehachsen (2 bzw. 15) aus einem unter Einwirkung einer vorbestimmten Stosskraft nachgebenden Material ausgeführt ist.

8. Einrichtung nach einem der vorangehenden Ansprüche, **dadurch gekennzeichnet, dass** zwischen der Führungsflosse (1) und der Steuerflosse (4) eine im wesentlichen horizontal verlaufende Trennplatte (10) angeordnet ist.

9. Einrichtung nach einem der vorangehenden Ansprüche, **dadurch gekennzeichnet, dass** die Verbindungsanordnung (14) zwischen der Führungsflosse (1) und der Steuerflosse (4) ein Einstellmittel zum Verändern der Grundeinstellung, z.B. zum Trimmen, der Steuerflosse (4) bezüglich der Führungsflosse (1) enthält.

10. Strassenfahrzeug mit mindestens einer Stabilisierund/oder Steuereinrichtung nach einem der Ansprüche 1 bis 9

## Claims

1. Device for improving the drivability of a road vehicle including at least one guide fin (1), which may be orientated in the longitudinal direction of the vehicle and is mounted on the vehicle body (12) to be freely pivotable about an upstanding first rotary axis (2), and at least one upwardly projecting control fin (4), which is arranged above the guide fin (1) and is mounted to be pivotable about a second upstanding rotary axis (15) and is coupled by means of a connecting arrangement (14) to the guide fin (1) to be deflectable relative to it about the second rotary axis (15), **characterised in that** the guide fin (1) is mounted and pivotally connected projecting upwardly above the vehicle structure within a longitudinal section of the vehicle body (12), that the control fin (4) is mounted on and pivotally connected to the guide fin (1) and that the connection arrangement (14) is mounted in the guide fin (1) and includes an control element for fixing the guide fin (1) in at least one deflected position.

2. Device as claimed in Claim 1, **characterised in that** the rotary axis (15) of the control fin (4) is offset rearwardly with respect to the rotary axis (2) of the guide fin (1).

3. Device as claimed in Claim 1 or 2, **characterised in that** the connection arrangement (14) includes at least one adjustment element (24), which may be coupled to the guide fin (1) and the control fin (4) and may be set into at least two coupled positions and by means of which, when the guide fin (1) is deflected through an angle of incidence (α) with respect to its basic position extending in the longitudinal direction of the vehicle, a deflection in the same sense in the one coupled position and a deflection in the opposite sense in the other coupled position through a setting angle (β) with respect to the guide fin (1) may be transmitted to the control fin (4).

4. Device as claimed in one of the preceding claims, **characterised in that** the connection arrangement (14) includes a control device (26), which may be coupled to the control fin (4) and may be controlled by the steering device (5) of the vehicle, which control device has a control element (6) for pivoting the control fin (4) about the second rotary axis (15).

5. Device as claimed in Claim 4, **characterised in that** the control device (26) includes at least one sensor (33), which is intended for detection of at least one stability parameter, e.g. lateral inclination, course, incident air flow, velocity, oscillation and the like of the vehicle and for transmitting corresponding control signals to the control element (6).

6. Device as claimed in one of the preceding claims, **characterised in that** the guide fin (1) and/or the control fin (4) are constructed with a respective rounded and/or rearwardly inclined front edge (7, 7a, 7b, respectively).

7. Device as claimed in one of the preceding claims, **characterised in that** at least one component of the guide fin (1) and/or of the control fin (4), e.g. a front edge (7, 7a) and/or a rear edge (8, 8a) and/or at least one portion of the bearing arrangement for one of the rotary axes (2, 15) is constructed of a material which yields under the action of a predetermined impact force.

8. Device as claimed in one of the preceding claims, **characterised in that** a substantially horizontally extending baffle plate (10) is arranged between the guide fin (1) and the control fin (4).

9. Device as claimed in one of the preceding claims, **characterised in that** the connection arrangement (14) between the guide fin (1) and the control fin (4) includes adjusting means for altering the basic position of, e.g. trimming, the control fin (4) with respect to the guide fin (1).

10. Road vehicle including at least one stabilising and/or control device as claimed in one of Claims 1 to 9.

## Revendications

1. Dispositif destiné à améliorer la tenue de route d'un véhicule routier, comportant au moins un aileron de guidage (1) pouvant être orienté dans la direction longitudinale du véhicule, qui est monté sur le corps du véhicule (12) de façon à pouvoir pivoter librement autour d'un premier axe de rotation (2) disposé à la verticale, et au moins un aileron de commande (4) disposé au-dessus de l'aileron de guidage (1) dépassant vers le haut, lequel est monté de façon à pouvoir pivoter autour d'un deuxième axe de rotation (15) disposé à la verticale, et qui, par l'intermédiaire d'un dispositif de liaison (14), est couplé à l'aileron de guidage (1) de façon à pouvoir dévier par rapport à celui-ci autour du deuxième axe de rotation (15), **caractérisé en ce que** l'aileron de guidage (1) est fixé et articulé à l'intérieur d'une section longitudinale du corps du véhicule (12) en dépassant de la carrosserie du véhicule vers le haut, l'aileron de commande (4) est fixé et articulé sur l'aileron de guidage (1), et le dispositif de liaison (14) est fixé dans l'aileron de guidage (1), et comporte au moins un moyen de réglage destiné à bloquer l'aileron de commande (4) dans au moins une position de déviation.

2. Dispositif selon la revendication 1, **caractérisé en ce que** l'axe de rotation (15) de l'aileron de commande (4) est décalé vers l'arrière par rapport à l'axe de rotation (2) de l'aileron de guidage (1).

3. Dispositif selon la revendication 1 ou 2, **caractérisé en ce que** le dispositif de liaison (14) comporte au moins un élément de manoeuvre (24) pouvant être couplé à l'aileron de guidage (1) et à l'aileron de commande (4) et pouvant être réglé dans au moins deux positions de couplage, par l'intermédiaire duquel, lors d'une déviation de l'aileron de guidage (1) d'un angle d'incidence (α) par rapport à sa position de base s'étendant dans la direction longitudinale du véhicule, une déviation d'un angle d'orientation (β), orientée dans le même sens par rapport à l'aileron de guidage (1), peut être transmise à l'aileron de commande (4), dans l'une des positions de couplage, et une déviation orientée dans le sens contraire dans l'autre position de couplage.

4. Dispositif selon l'une quelconque des revendications précédentes, **caractérisé en ce que** le dispositif de liaison (14) comprend un dispositif de commande (26) pouvant être couplé à l'aileron de commande (4), et influencé à partir du dispositif de direction (5) du véhicule, comportant un organe de réglage (6) destiné au pivotement de l'aileron de commande (4) autour du deuxième axe de rotation (15).

5. Dispositif selon la revendication 4, **caractérisé en ce que** le dispositif de commande (26) comprend au moins un capteur (33) qui est destiné à la détection d'au moins un paramètre de stabilité du véhicule, par exemple de l'inclinaison latérale, du cap, de l'afflux, de la vitesse, d'une vibration et analogue, et à la transmission de signaux de commande correspondant à l'organe de réglage (6).

6. Dispositif selon l'une quelconque des revendications précédentes, **caractérisé en ce que** l'aileron de guidage (1) et/ou l'aileron de commande (4) sont réalisés chacun avec un bord avant arrondi (7 ou 7a, 7b) et/ou incliné vers l'arrière.

7. Dispositif selon l'une quelconque des revendications précédentes, **caractérisé en ce qu'**une partie au moins de l'aileron de guidage (1) et/ou de l'aileron de commande (4), par exemple un bord avant (7 ou 7a) et/ou un bord arrière (8 ou 8a), et/ou au moins une partie du dispositif de support de l'un des axes de rotation (2 ou 15) est réalisé en un matériau cédant élastiquement sous l'effet d'une force de choc prédéfinie.

8. Dispositif selon l'une quelconque des revendications précédentes, **caractérisé en ce qu'**une plaque de séparation (10) s'étendant sensiblement à l'horizontale est disposée entre l'aileron de guidage (1) et l'aileron de commande (4).

9. Dispositif selon l'une quelconque des revendications précédentes, **caractérisé en ce que**, entre l'aileron de guidage (1) et l'aileron de commande (4), le dispositif de liaison (14) comporte un moyen de réglage pour la modification du réglage de base, par exemple pour le centrage de l'aileron de commande (4) par rapport à l'aileron de guidage (1).

10. Véhicule routier comportant au moins un dispositif de stabilisation et/ou de commande selon l'une quelconque des revendications 1 à 9.
